# EUROPEAN PATENT APPLICATION

(11) **EP 4 521 192 A1**
(43) Date of publication of application: **12.03.2025**
(21) Application number: 24739074.3
(22) Date of filing: 03.07.2024
(51) Int. Cl.: G06F 1/16, C09J 7/00

(54) **ELECTRONIC DEVICE COMPRISING HINGE UNIT**

(30) Priority: 19.07.2023 KR 20230093613; 18.08.2023 KR 20230108556
(71) Applicant: Samsung Electronics Co., Ltd, Suwon-si, Gyeonggi-do 16677 (KR)
(72) Inventor: JO, Jeonggyu, Suwon-si, Gyeonggi-do 16677 (KR); PARK, Dongmyeong, Suwon-si, Gyeonggi-do 16677 (KR)
(74) Representative: Appleyard Lees IP LLP
(86) International application number: PCT/KR2024/009401
(87) International publication number: WO 2025/018657

(57) **Abstract**

An electronic device includes a display including a first area, a second area, and a folding area between the first area and the second area, a hinge unit configured to support the first area and the second area and driven based on a folding axis, a center bar disposed between the hinge unit and the folding area, a hinge plate including a first plate and a second plate disposed on both sides of the center bar, respectively, a connection member disposed between the center bar and the folding area, a first member disposed between the first plate and the first area, and a second member disposed between the second plate and the second area. The first member and the second member are disposed to at least partially overlap with the connection member based on a direction in which the hinge plate is viewed from the display in a state in which the hinge unit is unfolded.

## Description

### BACKGROUND

### 1. Field

The disclosure relates to an electronic device including a hinge unit.

### 2. Description of Related Art

Recently, with the development of display-related technologies, electronic devices with flexible displays are being developed. A flexible display may be used in the form of a flat surface and may also be deformed to be used in a specific shape. For example, an electronic device with a flexible display may be implemented in a foldable form to be folded or unfolded about at least one folding axis.

However, the foregoing should not be construed as having been acknowledged by the applicant as a prior art to the description set forth in the disclosure but should be construed only as a related art to the invention described herein.

### SUMMARY

According to an embodiment of the present disclosure, an electronic device includes a display including a first area, a second area, and a folding area between the first area and the second area, a hinge unit configured to support the first area and the second area and drivable about a folding axis, a center bar disposed between the hinge unit and the folding area, a hinge plate including a first plate and a second plate disposed on respective sides of the center bar , a connection member disposed between the center bar and the folding area, a first member disposed between the first plate and the first area, and a second member disposed between the second plate and the second area. In an embodiment, the first member and the second member are disposed to at least partially overlap with the connection member based on a direction in which the hinge plate is viewed from the display in a state in which the hinge unit is unfolded.

According to an embodiment of the present disclosure, an electronic device includes a display including a first area, a second area, and a folding area between the first area and the second area, a hinge unit configured to support the first area and the second area and drivable about a folding axis, a center bar disposed between the hinge unit and the folding area, a hinge plate including a first plate and a second plate disposed on respectively sides of the center bar , a connection member disposed between the center bar and the folding area, a first member disposed between the first plate and the first area, a second member disposed between the second plate and the second area, a first adhesive layer disposed adjacent to the connection member and configured to connect the first member and the second member to the display, and a second adhesive layer configured to connect the first member and the second member to the hinge plate. In an embodiment, the first member and the second member are disposed to at least partially overlap with the connection member based on a direction in which the hinge plate is viewed from the display in a state in which the hinge unit is unfolded.

### BRIEF DESCRIPTION OF THE DRAWINGS

FIG. 1 is a block diagram of an electronic device in a network environment, according to various embodiments.
FIG. 2A is a view of an electronic device in an unfolded state, according to various embodiments.
FIG. 2B is a view of an electronic device in a folded state, according to various embodiments.
FIG. 3 is an exploded perspective view of a hinge unit and a hinge plate according to an embodiment.
FIG. 4 is an exploded perspective view of a display according to an embodiment.
FIG. 5 is a plan view illustrating the inside of an electronic device, according to an embodiment.
FIG. 6A is a schematic view illustrating a cross-section of an electronic device, according to an embodiment.
FIG. 6B is a schematic view illustrating a cross-section of the electronic device, according to an embodiment.
FIG. 7A is a schematic view illustrating a cross-section of an electronic device, according to an embodiment.
FIG. 7B is a schematic view illustrating a cross-section of the electronic device, according to an embodiment.
FIG. 8A is a schematic view illustrating an electronic device in a folded state, according to an embodiment.
FIG. 8B is a schematic view illustrating the electronic device in an unfolded state, according to an embodiment.

### DETAILED DESCRIPTION

Hereinafter, embodiments will be described in detail with reference to the accompanying drawings. When describing the embodiments with reference to the accompanying drawings, like reference numerals refer to like elements and a repeated description related thereto will be omitted.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that various embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and do not limit the components in other aspect (e.g., importance or order). It is to be understood that if a component (e.g., a first component) is referred to, with or without the term "operatively" or "communicatively", as "coupled with," "coupled to," "connected with," or "connected to" another component (e.g., a second component), the component may be coupled with the other component directly (e.g., by wire), wirelessly, or via a third component.

As used in connection with embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments of the disclosure as set forth herein may be implemented as software (e.g., a program 140) including one or more instructions that are stored in a storage medium (e.g., an internal memory 136 or an external memory 138) that is readable by a machine (e.g., an electronic device 101). For example, a processor (e.g., a processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. A machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStoreTM), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more of other operations may be added.

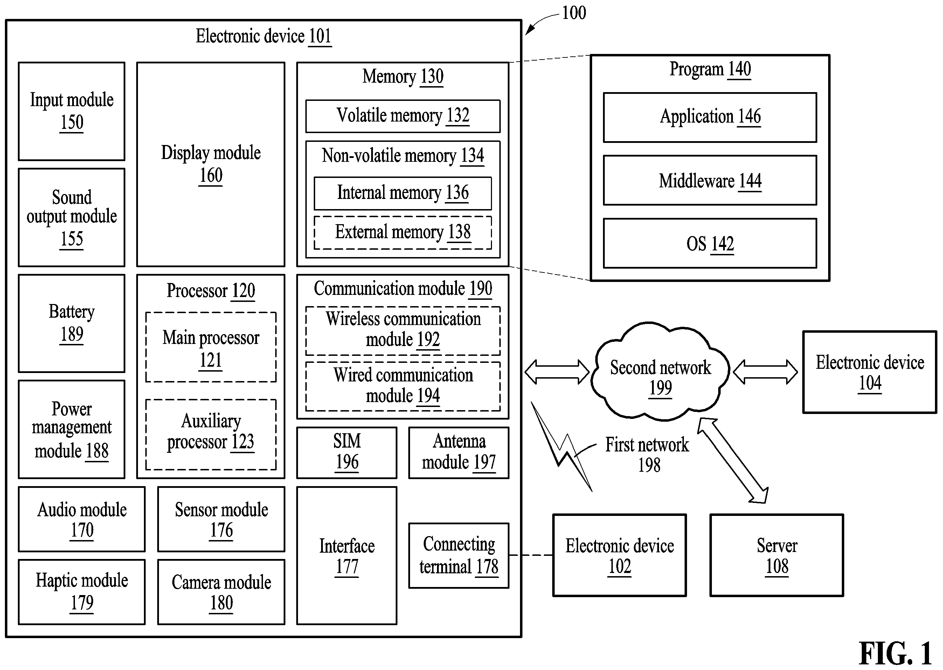

FIG. 1 is a block diagram of the electronic device 101 in a network environment 100, according to various embodiments.

Referring to FIG. 1, the electronic device 101 in the network environment 100 may communicate with an electronic device 102 via a first network 198 (e.g., a short-range wireless communication network) or communicate with an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added to the electronic device 101. In some embodiments, some (e.g., the sensor module 176, the camera module 180, or the antenna module 197) of the components may be integrated as a single component (e.g., the display module 160).

The processor 120 may execute, for example, software (e.g., the program 140) to control at least one other component (e.g., a hardware or software component) of the electronic device 101 connected to the processor 120 and may perform various data processing or computation. According to an embodiment, as at least a portion of data processing or computations, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a portion of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An Al model may be generated through machine learning. Such learning may be performed by, for example, the electronic device 101 in which Al is performed, or performed via a separate server (e.g., the server 108). A learning algorithm may include, but is not limited to, for example, supervised learning, unsupervised learning, semi-supervised learning, or reinforcement learning. The Al model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The Al model may additionally or alternatively include a software structure other than the hardware structure.

The memory 130 may store various pieces of data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from the outside (e.g., a user) of the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and a control circuit to control a corresponding one of the display, the hologram device, and the projector. According to an embodiment, the display module 160 may include a touch sensor adapted to detect a touch or a pressure sensor adapted to measure an intensity of a force incurred by the touch.

The audio module 170 may convert a sound into an electric signal or vice versa. According to an embodiment, the audio module 170 may obtain the sound via the input module 150 or output the sound via the sound output module 155 or an external electronic device (e.g., an electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus, which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., a LAN or a wide area network (WAN))). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., an mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beamforming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form an mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and exchange signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer a result of the performance to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra low-latency services using, e.g., distributed computing or MEC. In an embodiment, the external electronic device 104 may include an Internet-of-things (loT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or loT-related technology.

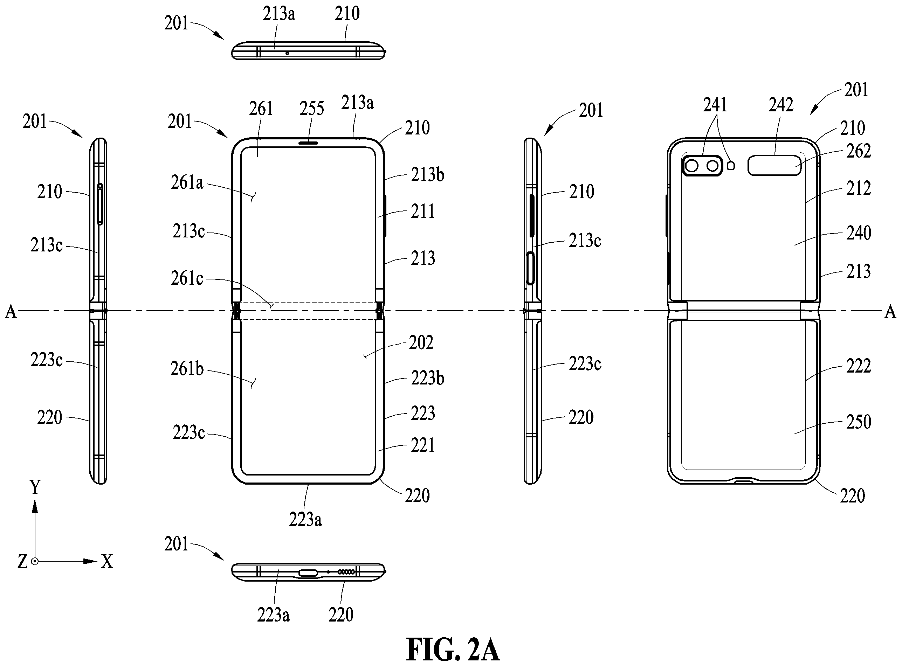

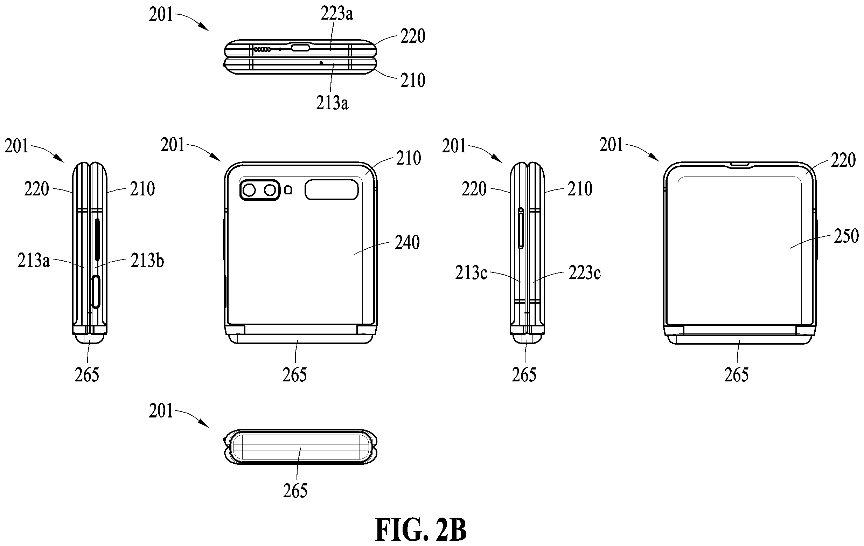

FIG. 2A is a view of an electronic device in an unfolded state, according to various embodiments. FIG. 2B is a view of the electronic device in a folded state, according to various embodiments.

Referring to FIGS. 2A and 2B, a foldable electronic device 201 includes a pair of housings 210 and 220 rotatably coupled to each other through a hinge structure to be folded with respect to each other, a hinge cover 265 for covering foldable portions of the pair of housings 210 and 220, and a display 261 (e.g., a flexible display or a foldable display) disposed in a space formed by the pair of housings 210 and 220. In the present disclosure, a surface on which the display 261 is disposed is defined as a front surface of the foldable electronic device 201, and a surface opposite to the front surface is defined as a rear surface of the foldable electronic device 201. In addition, a surface surrounding a space between the front surface and the rear surface is defined as a side surface of the foldable electronic device 201.

In an embodiment, the pair of housings 210 and 220 include a first housing 210, a second housing 220, a first rear cover 240, and a second rear cover 250. The pair of housings 210 and 220 of the electronic device 201 are not limited to the shapes or the combination and/or coupling of components shown in FIGS. 2A and 2B, and may be implemented in other shapes or by another combination and/or coupling of components.

In an embodiment, the first housing 210 and the second housing 220 are disposed on both sides (e.g., an upper portion and a lower portion) with respect to a folding axis A, and may be disposed substantially symmetrical with respect to the folding axis A. In an embodiment, an angle or distance between the first housing 210 and the second housing 220 may vary depending on whether the electronic device 201 is in an unfolded state, a folded state, or an intermediate state.

In an embodiment, the first housing 210 is connected to a hinge structure in the unfolded state of the electronic device 201. The first housing 210 includes a first surface 211 facing the front surface of the electronic device 201, a second surface 212 facing a direction opposite to the first surface 211, and a first side portion 213 enclosing at least a portion of a space between the first surface 211 and the second surface 212. The first side portion 213 includes a first side surface 213a disposed substantially in parallel with the folding axis A, a second side surface 213b extending in a direction substantially perpendicular to the folding axis A from one end of the first side surface 213a, and a third side surface 213c extending in a direction substantially perpendicular to the folding axis A from the other end of the first side surface 213a and substantially parallel to the second side surface 213b. The second housing 220 is connected to the hinge structure in the unfolded state of the electronic device 201. The second housing 220 includes a third surface 221 facing the front surface of the electronic device 201, a fourth surface 222 facing a direction opposite to the third surface 221, and a second side portion 223 enclosing at least a portion of a space between the third surface 221 and the fourth surface 222. The second side portion 223 includes a fourth side surface 223a disposed substantially in parallel with the folding axis A, a fifth side surface 223b extending in a direction substantially perpendicular to the folding axis A from one end of the fourth side surface 223a, and a sixth side surface 223c extending in a direction substantially perpendicular to the folding axis A from the other end of the fourth side surface 223a and substantially parallel to the fifth side surface 223b. The first surface 211 and the third surface 221 face each other when the electronic device 201 is in the folded state.

In an embodiment, the electronic device 201 includes an accommodating portion 202 that is recessed and for accommodating the display 261 through the structural coupling of the first housing 210 and the second housing 220. The accommodating portion 202 has substantially the same size as the display 261.

In an embodiment, at least a portion of the first housing 210 and the second housing 220 is formed of a metal material or a non-metal material having a predetermined magnitude of rigidity appropriate to support the display 261.

In an embodiment, the electronic device 201 includes a sound output module 255 (e.g., the sound output module 155) disposed through at least a partial area of the first surface 211

In an embodiment, the first rear cover 240 is disposed on the second surface 212 of the first housing 210 and has a substantially rectangular periphery. At least a portion of the periphery of the first rear cover 240 is surrounded by the first housing 210. The second rear cover 250 is disposed on the fourth surface 222 of the second housing 220 and has a substantially rectangular periphery. At least a portion of the periphery of the second rear cover 250 is surrounded by the second housing 220.

In an embodiment, the first rear cover 240 and the second rear cover 250 have substantially symmetrical shapes with respect to the folding axis A. In another embodiment, the first rear cover 240 and the second rear cover 250 have different shapes. In yet another embodiment, the first housing 210 and the first rear cover 240 are integrally formed, and the second housing 220 and the second rear cover 250 are integrally formed.

In an embodiment, the first housing 210, the second housing 220, the first rear cover 240, and the second rear cover 250 provide a space in which various components (e.g., a PCB, the antenna module 197, the sensor module 176, or the battery 189) of the electronic device 201 are arranged through a structure in which the first housing 210, the second housing 220, the first rear cover 240, and the second rear cover 250 are coupled to one another. In an embodiment, at least one component is visually exposed from the rear surface of the electronic device 201. For example, at least one component is visually exposed through a first rear area 241 of the first rear cover 240. Here, the component includes a proximity sensor, a rear camera module, and/or a flash. In an embodiment, at least a portion of a sub-display 262 is visually exposed through a second rear area 242 of the first rear cover 240.

In an embodiment, the display 261 is disposed in the accommodating portion 202 formed by the pair of housings 210 and 220. For example, the display 261 is arranged to occupy substantially most of the front surface of the electronic device 201. The front surface of the electronic device 201 include an area in which the display 261 is disposed, and a partial area (e.g., a peripheral area) of the first housing 210 and a partial area (e.g., a peripheral area) of the second housing 220, which are adjacent to the display 261. The rear surface of the electronic device 201 includes the first rear cover 240, a partial area (e.g., a peripheral area) of the first housing 210 adjacent to the first rear cover 240, the second rear cover 250, and a partial area (e.g., a peripheral area) of the second housing 220 adjacent to the second rear cover 250. In an embodiment, the display 261 is a display in which at least a partial area is deformable into a planar surface or a curved surface. In an embodiment, the display 261 includes a folding area 261c, a first area 261a on a first side (e.g., an upper portion) of the folding area 261c, and a second area 261b on a second side (e.g., a lower portion) of the folding area 261c. The first area 261a is positioned on the first surface 211 of the first housing 210, and the second area 261b is positioned on the third surface 221 of the second housing 220. However, the area division of the display 261 is only an example, and the display 261 may be divided into a plurality of areas depending on the structure or functions of the display 261. For example, as shown in FIG. 2A, the display 261 may be divided into areas based on the folding axis A or the folding area 261c extending in parallel to the X-axis, or the display 261 may be divided into areas based on another folding area (e.g., a folding area extending in parallel to the Y-axis) or another folding axis (e.g., a folding axis parallel to the Y-axis). The area division of the display 261 as above is only physical division based on the pair of housings 210 and 220 and the hinge structure, and the display 261 may display substantially one screen through the pair of housings 210 and 220 and the hinge structure. In an embodiment, the first area 261a and the second area 261b have substantially symmetrical shapes with respect to the folding area 261c.

In an embodiment, the hinge cover 265 is disposed between the first housing 210 and the second housing 220 and configured to cover the hinge structure. The hinge cover 265 is hidden by at least a portion of the first housing 210 and the second housing 220 or exposed to the outside according to the operational state of the electronic device 201. For example, when the electronic device 201 is in an unfolded state, as shown in FIG. 2A, the hinge cover 265 is hidden by the first housing 210 and the second housing 220 and not exposed to the outside, and when the electronic device 201 is in a folded state, as shown in FIG. 2B, the hinge cover 265 is exposed to the outside between the first housing 210 and the second housing 220. In addition, when the electronic device 201 is in an intermediate state in which the first housing 210 and the second housing 220 form an angle with each other, at least a portion of the hinge cover 265 is exposed to the outside between the first housing 210 and the second housing 220. In this case, the area of the hinge cover 265 exposed to the outside is less than the area of the hinge cover 265 exposed when the electronic device 201 is in the folded state. In an embodiment, the hinge cover 265 has a curved surface.

For the description of the operation of the electronic device 201 according to an embodiment, when the electronic device 201 is in an unfolded state (e.g., the state of the electronic device 201 of FIG. 2A), the first housing 210 and the second housing 220 form a first angle (e.g., about 180 degrees) with each other, and the first area 261a and the second area 261b of the display 261 are oriented in substantially the same direction. The folding area 261c of the display 261 is on substantially the same plane as the first area 261a and the second area 261b. In another embodiment, when the electronic device 201 is in the unfolded state, the first housing 210 rotates at a second angle (e.g., about 360 degrees) relative to the second housing 220, whereby the first housing 210 and the second housing 220 are reversely folded such that the second surface 212 and the fourth surface 222 may face each other. Moreover, when the electronic device 201 is in the folded state (e.g., the state of the electronic device 201 of FIG. 2B), the first housing 210 and the second housing 220 face each other. The first housing 210 and the second housing 220 form an angle of about 0 degrees to about 10 degrees, and the first area 261a and the second area 261b of the display 261 face each other. At least a portion of the folding area 261c of the display 261 is deformed into a curved surface. In addition, when the electronic device 201 is in the intermediate state, the first housing 210 and the second housing 220 form a predetermined angle with each other. An angle (e.g., a third angle, about 90 degrees) formed by the first area 261a and the second area 261b of the display 261 is greater than that when the electronic device 201 is in the folded state and less than that when the electronic device 201 is in the unfolded state. At least a portion of the folding area 261c of the display 261 is deformed into a curved surface. In this case, a curvature of the curved surface of the folding area 261c is less than that when the electronic device 201 is in the folded state.

In addition, the various embodiments of the electronic device described herein are not limited to the form factor of the electronic device 201 described with reference to FIGS. 2A and 2B and may also apply to electronic devices with various form factors.

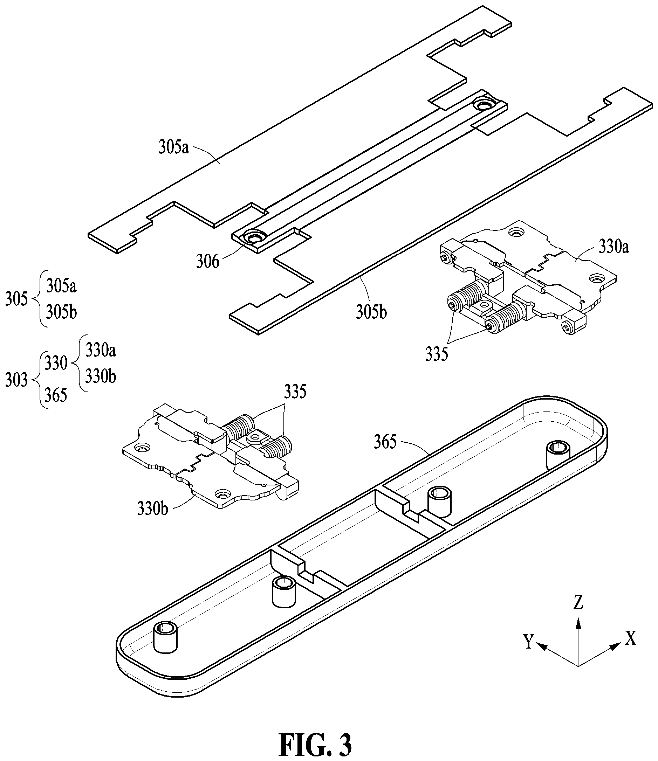

FIG. 3 is an exploded perspective view of a hinge unit and a hinge plate according to an embodiment.

Referring to FIG. 3, an electronic device (e.g., the electronic device 101 of FIG. 1 or the electronic device 201 of FIGS. 2A and 2B) according to an embodiment includes a hinge assembly 303, a center bar 306, and a hinge plate 305.

In an embodiment, the hinge assembly 303 includes a plurality of hinge units 330 disposed on both sides in the longitudinal direction (e.g., X-axis direction) of the hinge plate 305 and a hinge cover 365 that at least partially covers the plurality of hinge units 330.

In an embodiment, the center bar 306 is disposed horizontal to and facing a folding axis (e.g., the folding axis A of FIG. 2A or the X-axis of FIG. 3) of the hinge assembly 303. The hinge plate 305 is disposed on both sides (e.g., +Y and -Y directions) of the center bar 306, respectively, and includes a first plate 305a and a second plate 305b that rotates or move based on the center bar 306.

In an embodiment, the center bar 306 is fixed to the hinge assembly 303, and the first plate 305a and the second plate 305b are rotated or moved by a gear 335 of the hinge assembly 303 to fold other components (e.g., the pair of housings 210 and 220 or the display 261 of FIGS. 2A and 2B).

For example, each of the first plate 305a and the second plate 305b are coupled to one of a first housing (e.g., the first housing 210 of FIGS. 2A and 2B) and a second housing (e.g., the second housing 220 of FIGS. 2A and 2B). The first plate 305a and the second plate 305b rotate or move the first housing 310 and the second housing 320 while supporting the first housing 310 and the second housing 320.

In an embodiment, the hinge unit 330 includes a first hinge unit 330a and a second hinge unit 330b. The first hinge unit 330a is disposed on one side (e.g., +X direction) of the hinge plate 305. The second hinge unit 330b is disposed on the other side (e.g., -X direction) of the hinge plate 305.

In an embodiment, the first hinge unit 330a and the second hinge unit 330b are arranged to be symmetric with respect to an axis (e.g., the Y-axis passing through the center of the hinge plate 305) perpendicular to the folding axis A and passing through the center of the hinge plate 305. The first hinge unit 330a and the second hinge unit 330b include a plurality of gears 335.

In an embodiment, the plurality of gears 335 is disposed to be symmetrical with respect to the folding axis A. For example, the first hinge unit 330a may include two gears 335, and the two gears 335 are disposed to be spaced apart from each other in both directions (e.g., +Y and -Y directions) with respect to the folding axis A. However, the arrangement of the plurality of gears 335 is not limited thereto. The plurality of gears 335 may be disposed to be asymmetrical with respect to the folding axis A or the direction (e.g., Y-axis or Z-axis direction) perpendicular to the folding axis A.

In an embodiment, the plurality of gears 335 is inserted into a gear shaft (not shown) to rotate and may rotate or move the first plate 305a and the second plate 305b based on the center bar 306.

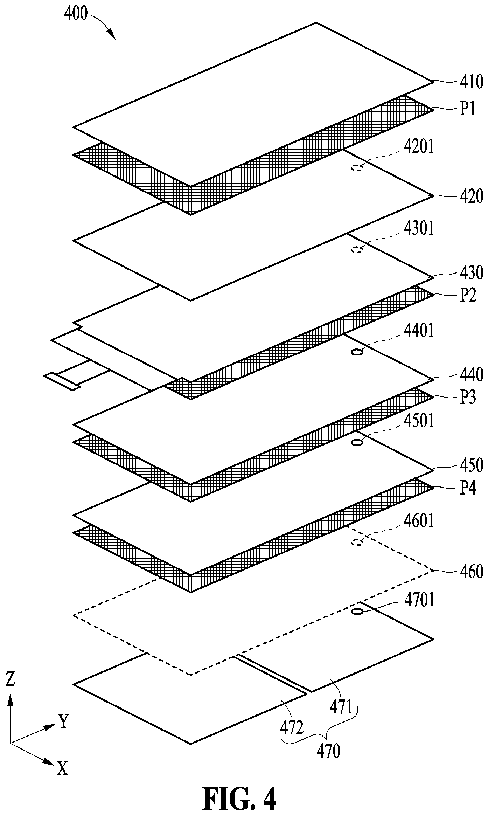

FIG. 4 is an exploded perspective view of a display according to an embodiment.

Referring to FIG. 4, a display 400 (e.g., the display module 160 of FIG. 1 or the display 261 of FIG. 2A) according to an embodiment includes at least some of foldable glass 410, polarizer 420 (e.g., a polarizing film), a display panel 430, a polymer layer 440, a metal sheet layer 450, and a reinforcement plate 470.

In an embodiment, the foldable glass 410, the polarizer 420, the display panel 430, the polymer layer 440, and the metal sheet layer 450 are disposed to pass through at least a portion of a first surface (e.g., the first surface 211 of FIG. 2A) of a first housing (e.g., the first housing 210 of FIG. 2A) and a third surface (e.g., the third surface 221 of FIG. 2A) of a second housing (e.g., the second housing 220 of FIG. 2A).

In an embodiment, each of the foldable glass 410, the polarizer 420, the display panel 430, the polymer layer 440, the metal sheet layer 450, and the reinforcement plate 470 are attached to one another through adhesives (e.g., a first adhesive P1, a second adhesive P2, a third adhesive P3, and a fourth adhesive P4) (or glue or adhesive layers). The adhesives include the first adhesive P1, the second adhesive P2, the third adhesive P3, and the fourth adhesive P4. For example, the adhesives (e.g., P1, P2, P3, and P4) may include at least one of an optical clear adhesive (OCA), a pressure sensitive adhesive (PSA), a heat-reactive adhesive, a general adhesive, or a double-sided tape.

In an embodiment, the foldable glass 410 supports and protects the display 400. In addition, the foldable glass 410 includes a plurality of bridge structures disposed in an area corresponding to a foldable portion (e.g., the folding area 261c of FIG. 2A) of the display 400. The plurality of bridge structures provide improved flexibility to the display 400, assist in the bending motion of the foldable glass 410, and reinforce the rigidity of the display 400.

In an embodiment, the polarizer 420 optionally allows light to pass through the polarizer 420, wherein the light is generated from a light source of the display panel 430 and vibrates in a predetermined direction. According to an embodiment, the polarizer 420 is formed integrally with the display panel 430.

In an embodiment, the display panel 430 includes a plurality of pixels and wiring structures (e.g., an electrode pattern). The display panel 430 is a foldable display panel. The display panel 430 is supported by at least one layer (e.g., the metal sheet layer 450 and the reinforcement plate 470) and linked to a hinge unit (e.g., the hinge assembly 303 of FIG. 3) to be folded or unfolded.

In an embodiment, the polymer layer 440 is disposed beneath the display panel 430. The polymer layer 440 provides a dark background to ensure the visibility of the display panel 430 and is formed of a cushioning material to alleviate an impact transmitted to the display 400. In an embodiment, in order to waterproof the display 400, the polymer layer 440 may be omitted or may be disposed beneath the metal sheet layer 450.

In an embodiment, the metal sheet layer 450 is formed in a shape that provides flexibility to the display 400. The metal sheet layer 450 include at least one of steel use stainless (SUS) (e.g., stainless steel (STS)), Cu, Al, or metal clad(e.g., a laminated member obtained by disposing SUS and Al in an alternating manner). Alternatively, the metal sheet layer 450 may include other alloy materials.

In an embodiment, the metal sheet layer 450 helps to reinforce the rigidity of an electronic device (e.g., the electronic device 101 of FIG. 1 and the electronic device 201 of FIGS. 2A and 2B), shield ambient noise, and disperse heat emitted from a surrounding heat-emitting component.

In an embodiment, the display 400 includes a digitizer 460. The digitizer 460 is disposed beneath the metal sheet layer 450 and is a detection member that receives an input from an electronic pen (e.g., a stylus). For example, the digitizer 460 includes a coil member disposed on a dielectric substrate to detect an electromagnetic induction-type resonance frequency applied from the electronic pen.

In an embodiment, the display 400 further includes at least one functional member (not shown) disposed between the polymer layer 440 and the metal sheet layer 450 or beneath the metal sheet layer 450. For example, the functional member may include a graphite sheet for heat dissipation, a force touch flexible printed circuit board (FPCB), a fingerprint sensor FPCB, an antenna radiator for communication, or a conductive/non-conductive tape.

In an embodiment, an electronic device (e.g., the electronic device 101 of FIG. 1 and the electronic device 201 of FIGS. 2A and 2B) is disposed beneath the display 400 and includes a camera device (e.g., the camera module 180 of FIG. 1) that detects an external environment through the display 400 or at least one sensor module (e.g., the sensor module 176 of FIG. 1) (e.g., an illuminance sensor, a proximity sensor, or a time of flight (TOF) sensor).

In an embodiment, each of the polarizer 420, the display panel 430, the polymer layer 440, the metal sheet layer 450, the digitizer 460, and the reinforcement plate 470 include through holes 4201, 4301, 4401, 4501, 4601, and 4701. However, the display panel 430 and/or the polarizer 420 may not require the through holes 4201 and 4301 by adjusting the transmittance of a corresponding area.

In an embodiment, the size of each of the through holes 4201, 4301, 4401, 4501, 4601, and 4701 is determined by the type, size, and/or angle of view of the camera device or the sensor module. The sizes of the through holes 4201, 4301, 4401, 4501, 4601, and 4701 may differ from one another.

In an embodiment, the display 400 includes a rollable-type display with a changeable display area, a slidable-type display, or an extensible-type display.

In an embodiment, the reinforcement plate 470 includes a first reinforcement plate 471 facing the first housing (e.g., the first housing 210 of FIG. 2A) and a second reinforcement plate 472 facing the second housing (e.g., the second housing 220 of FIG. 2A). The reinforcement plate 470 is formed to support the entire area of the display 400, as illustrated in FIG. 4. However, embodiments are not limited thereto, and the reinforcement plate 470 may be adjacent to the folding area of the display 400 to support at least a partial area of two areas.

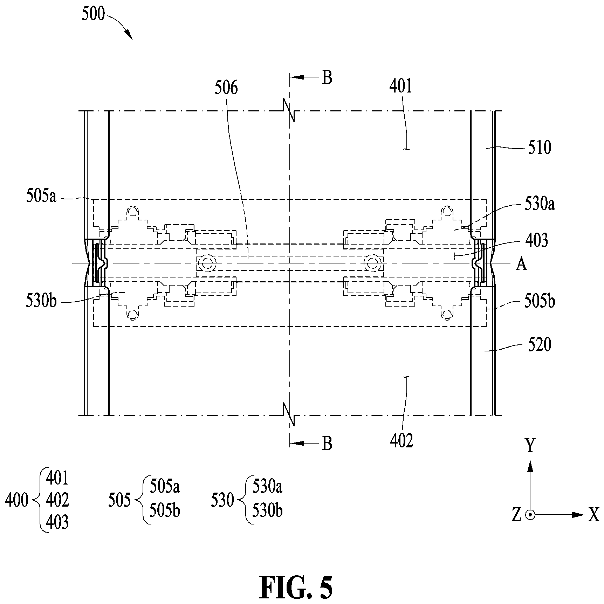

FIG. 5 is a plan view illustrating the inside of an electronic device 500, according to an embodiment.

Referring to FIG. 5, the electronic device 500 (e.g., the electronic device 101 of FIG. 1 or the electronic device 201 of FIGS. 2A and 2B) according to an embodiment includes at least some of a first housing 510 (e.g., the first housing 210 of FIGS. 2A and 2B), a second housing 520 (e.g., the second housing 220 of FIGS. 2A and 2B), the display 400 (e.g., the display module 160 of FIG. 1, the display 261 of FIG. 2A, or the display 400 of FIG. 4), a hinge unit 530 (e.g., the hinge unit 330 of FIG. 3), a center bar 506 (e.g., the center bar 306 of FIG. 3), and a hinge plate 505 (e.g., the hinge plate 305 of FIG. 3).

Hereinafter, the description provided above is not repeated, and it is obvious that a portion of the configuration and structure of the electronic device 500 may be replaced, added, or omitted within a scope easily understandable by one of ordinary skill in the art with reference to the following drawings and descriptions. In addition, at least one component or feature of the embodiments described above may be coupled to the electronic device 500 unless this is technically and clearly infeasible.

The electronic device 500 according to an embodiment is a foldable electronic device (e.g., 500). For example, the electronic device 500 may be folded or unfolded based on the folding axis A (or a hinge axis).

In an embodiment, the first housing 510 and the second housing 520 form at least a portion of the exterior of the electronic device 500. The first housing 510 and the second housing 520 accommodate electrical components of the electronic device 500 therein and protect the electrical components of the electronic device 500 from an external impact or the inflow of foreign substances.

For example, the first housing 510 includes a front surface (e.g., the first surface 211 of FIG. 2A) facing the front of the electronic device 500 or the direction (e.g., +Z direction) of the display 400, a rear surface (e.g., the second surface 212 of FIGS. 2A and 2B) facing the direction (e.g., -Z direction) opposite to the direction of the display 400, and a side surface (e.g., the first side portion 213 of FIGS. 2A and 2B) surrounding at least a portion of the space between the front surface and the rear surface.

For example, the second housing 520 includes a front surface (e.g., the third surface 221 of FIG. 2A) facing the front of the electronic device 500 or the direction of the display 400, a rear surface (e.g., the fourth surface 222 of FIGS. 2A and 2B) facing the direction opposite to the direction of the display 400, and a side surface (e.g., the second side portion 223 of FIGS. 2A and 2B) surrounding at least a portion of the space between the front surface and the rear surface.

In an embodiment, the first housing 510 and the second housing 520 include a conductive pattern or a conductive material connected to the inside of the electronic device 500. The conductive pattern or the conductive material are connected to a processor (e.g., the processor 120 of FIG. 1) or a communication module (e.g., the communication module 190 of FIG. 1) of the electronic device 500 to operate as an antenna structure (e.g., the antenna module 197 of FIG. 1).

In an embodiment, the first housing 510 and the second housing 520 are coupled to both sides (e.g., +Y and -Y directions) of the hinge unit 530 in a state in which the display 400 is connected to the hinge unit 530. The first housing 510 and the second housing 520 are connected to the hinge unit 530 and may be moved by the hinge unit 530 either relative to or away from each other. Alternatively, in a state in which the first housing 510 is connected to the first area 401 of the display 400 and the second housing 520 is connected to the second area 402 of the display 400, the first area 401 and the second area 402 are connected to the hinge unit 530 and the first area 401 and the second area 402 may be moved by the hinge unit 530 either relative to or away from each other.

In an embodiment, an angle or distance between the first housing 510 and the second housing 520 may vary depending on whether the electronic device 500 is in a flat or unfolded state, a folded state, or an intermediate state. For example, the flat or unfolded state may be a state in which the first housing 510 and the second housing 520 are moved farthest away from each other. For example, the folded state may be a state in which the first housing 510 and the second housing 520 are moved closest to each other. For example, the intermediate state may include all states between the unfolded state and the folded state.

In an embodiment, the first housing 510 and the second housing 520 provide a space in which the display 400 is disposed. The display 400 may be, for example, a foldable flexible display (e.g., 400).

For example, the display 400 includes the first area 401 (e.g., the first area 261a of FIG. 2A), the second area 402 (e.g., the second area 261b of FIG. 2A), and the folding area 403 (e.g., the folding area 261c of FIG. 2A) between the first area 401 and the second area 402.

In an embodiment, the first housing 510 is disposed at a position facing the first area 401 of the display 400 to support the first area 401 of the display 400. The second housing 520 is disposed at a position facing the second area 402 of the display 400 to support the second area 402 of the display 400.

In an embodiment, the hinge unit 530 is disposed between the first housing 510 and the second housing 520 to connect the first housing 510 to the second housing 520. For example, the hinge unit 530 includes a first hinge unit 530a (e.g., the first hinge unit 330a of FIG. 3) and a second hinge unit 530b (e.g., the second hinge unit 330b o FIG. 3).

In an embodiment, the hinge units (e.g., 530a and 530b) are spaced apart from each other in both directions (e.g., +X and -X directions) along the folding axis A. For example, as illustrated in FIG. 5, the first hinge unit 530a and the second hinge unit 530b are disposed to be spaced apart from each other on both sides (e.g., +/-X direction) of the electronic device 500 along the folding axis A. However, this is only an example, and the number and arrangement of hinge units (e.g., 530a and 530b) are not limited thereto.

In an embodiment, the hinge unit 530 is operable to implement a folding or unfolding operation of the electronic device 500. The hinge unit 530 operates between the folded state and the unfolded state, wherein, in the folded state, the first area 401 and the second area 402 may face each other and, in the unfolded state, the first area 401 and the second area 402 are spaced apart from each other and substantially face the same direction without facing each other. The hinge unit 530 may generate a detent force to maintain a predetermined state of the electronic device 500.

For example, when the electronic device 500 is in the folded state, the hinge unit 530 is operable to generate a force (e.g., a close detent force) to maintain the folded state of the electronic device 500.

For example, when the electronic device 500 is in the unfolded state, the hinge unit 530 is operable to generate a force (e.g., an open detent force) to maintain the unfolded state of the electronic device 500.

For example, when the electronic device 500 is in the intermediate state, the hinge unit 530 is operable to generate a force (e.g., a free stop force) to maintain the electronic device 500 in the intermediate state.

In an embodiment, the center bar 506 faces the folding axis of the hinge unit 530 in the direction horizontal to the folding axis. The center bar 506 reinforces the rigidity of the hinge unit 530 and protects the hinge unit 530 from an external impact by absorbing the impact transmitted from the outside.

In an embodiment, the hinge plate 505 is provided between the hinge unit 530 and the display 400. The hinge plate 505 includes a first plate 505a (e.g., the first plate 305a of FIG. 3) and a second plate 505b (e.g., the second plate 305b of FIG. 3).

In an embodiment, the first plate 505a and the second plate 505b are disposed on both sides (e.g., +Y and -Y directions) of the center bar 506, respectively. The first plate 505a is connected to at least a portion of the first area 401 of the display 400 and supports the first area 401. The second plate 505b is connected to at least a portion of the second area 402 of the display 400 and support the second area 402.

In an embodiment, each of the first plate 505a and the second plate 505b are connected to the hinge unit 530. The first plate 505a and the second plate 505b are operable to be moved in interoperation with the operation of the hinge unit 530 and assist in the folding operation of the first housing 510, the second housing 520, and/or the display 400.

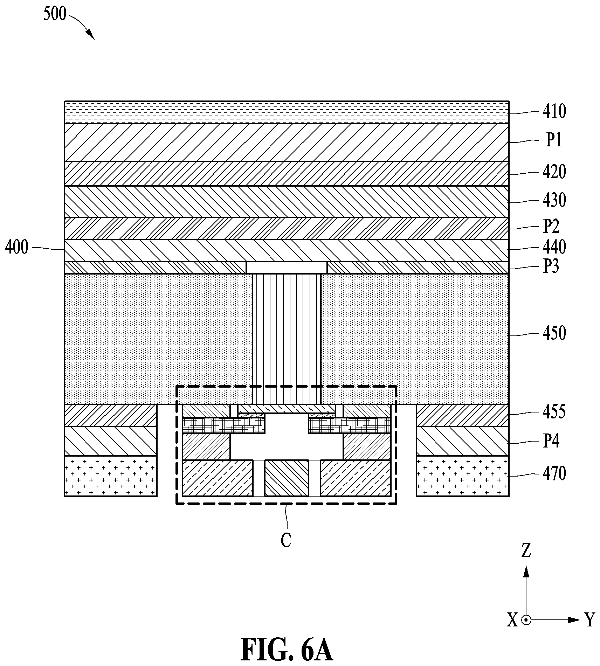

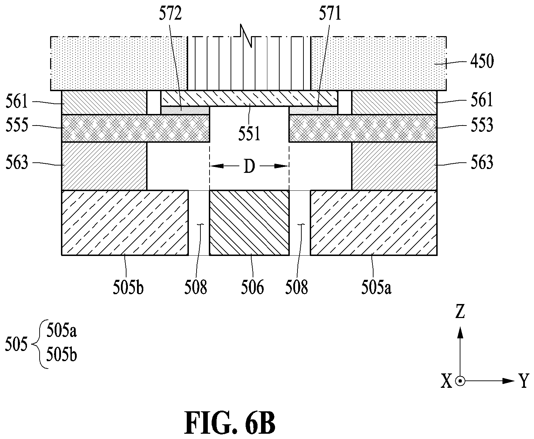

FIG. 6A is a schematic view illustrating a cross-section of the electronic device 500, according to an embodiment. FIG. 6B is a schematic view illustrating a cross-section of the electronic device 500, according to an embodiment.

Particularly, FIG. 6A is a cross-sectional view of a partial area of the electronic device 500 that is viewed based on the line B-B' of FIG. 5. FIG. 6B is an enlarged view of an area C of FIG. 6A.

Referring to FIGS. 6A and 6B, the electronic device 500 according to an embodiment include at least some of a connection member 551, a first member 553, and a second member 555.

Hereinafter, the description provided above is not repeated, and it is obvious that a portion of the configuration and structure of the electronic device 500 may be replaced, added, or omitted within a scope easily understandable by one of ordinary skill in the art with reference to the following drawings and descriptions. In addition, at least one component or feature of the embodiments described above may be coupled to the electronic device 500 unless this is technically and clearly infeasible.

In an embodiment, a shield layer 455 is provided between the metal sheet layer 450 of the display 400 and the fourth adhesive P4. The shield layer 455 protects the metal sheet layer 450 and absorbs an impact transmitted to the metal sheet layer 450. For example, the shield layer 455 prevents foreign substances, such as moisture, sand, or dust, from entering the metal sheet layer 450.

In an embodiment, the shield layer 455 is disposed adjacent to the connection member 551 in the side direction (e.g., X-Y plane direction) of the connection member 551. The shield layer 455 is formed of thermoplastic polyurethane (TPU).

In an embodiment, the center bar 506 (e.g., the center bar 306 of FIG. 3) is disposed between the hinge unit 530 and the folding area 403 of the display 400. The hinge plate 505 (e.g., the hinge plate 305 of FIG. 3) includes the first plate 505a (e.g., the first plate 305a of FIG. 3) and the second plate 505b (e.g., the second plate 305b of FIG. 3) disposed on both sides (e.g., +Y and -Y directions) of the center bar 506, respectively.

In an embodiment, an open area 508 is formed between the center bar 506 and the hinge plate 505. For example, the open area 508 is formed between the center bar 506 and the first plate 505a and between the center bar 506 and the second plate 505b.

In an embodiment, some components (e.g., a gear, a cam member, and/or a spring) of a hinge unit (e.g., the hinge unit 530 of FIG. 5) are disposed in the open area 508. Alternatively, some components of the hinge unit 530 may be disposed beneath the open area 508. When the hinge unit 530 is in the folded state or the intermediate state, some components of the hinge unit 530 may be positioned in the open area 508.

In an embodiment, the connection member 551 is disposed to face a folding area (e.g., the folding area 403 of FIG. 5) of the display 400. For example, the connection member 551 is disposed to face the folding area 430 of the display 400, an adjacent area of the folding area 430, and the metal sheet layer 450 of the display 400.

In an embodiment, the connection member 551 is adhered to step members (e.g., a first step member 571 and a second step member 572). The step members (e.g., 571 and 572) include an adhesive material with adhesiveness. For example, at least a portion of one surface (e.g., the surface in the +Z direction) of the connection member 551 is disposed to face the metal sheet layer 450 of the display 400, and at least a partial area of the other surface (e.g., the surface in the -Z direction) of the connection member 551 may be connected to the step members (e.g., 571 and 572).

In an embodiment, the connection member 551 is adapted to prevent foreign substances, such as moisture, sand, or dust, from entering the metal sheet layer 450 of the display 400. The connection member 551 is formed of the same material as the shield layer 455, for example, TPU.

In an embodiment, the first member 553 and the second member 555 are disposed between the hinge plate 505 and the display 400. For example, the first member 553 and the second member 555 directly or indirectly connect the hinge plate 505 to the display 400. The first member 553 and the second member 555 are adhered to the display 400 or the hinge plate 505 through at least one adhesive layer (e.g., a first adhesive layer 561 and a second adhesive layer 563) formed of an adhesive.

In an embodiment, the first member 553 and the second member 555 are disposed beneath (e.g., -Z direction) the metal sheet layer 450 of the display 400. For example, the first member 553 may be disposed between a first area (e.g., the first area 401 of FIG. 5) of the display 400 and the first plate 505a. The second member 555 may be disposed between a second area (e.g., the second area 402 of FIG. 5) of the display 400 and the second plate 505b.

In an embodiment, the first member 553 and the second member 555 are formed of a material with high rigidity and excellent durability. For example, each of the first member 553 and the second member 555 may be formed of a material including at least one of a carbon fiber reinforced plastic (CFRP), a glass fiber reinforced plastic (GFRP), and an aramid fiber reinforced polymer (AFRP). Alternatively, for example, the first member 553 and the second member 555 may be formed of SUS (e.g., STS), a Cu alloy, or an Al alloy.

In an embodiment, the first member 553 and the second member 555 are disposed to at least partially overlap with the connection member 551 based on the direction in which the hinge plate 505 is viewed from the display 400 in a state in which the hinge unit 530 is unfolded.

For example, as illustrated in FIG. 6B, one end (e.g., the end in the -Y direction) of the first member 553 and one end (e.g., the end in the +Y direction) of the second member 555 may be disposed to face the lower surface (e.g., the surface in the -Z direction) of the connection member 551.

In an embodiment, the first member 553 and the second member 555 extend to a position facing the connection member 551 opposite to the folding area 403 of the display 400, thereby absorbing an impact received from the folding area 403 of the display 400. In addition, the first member 553 and the second member 555 reinforce the rigidity and durability of the folding area 403 of the display 400 and improve the connectivity between the components of the electronic device 500.

In an embodiment, the electronic device 500 covers the open area 508 through the first member 553 and the second member 555. The first member 553 and the second member 555 prevent the open area 508 from being exposed in the direction of the display 400 or reduce the exposed area.

In an embodiment, the first member 553 and the second member 555 flatten the folding area 403 of the display 400 in a state in which the electronic device 500 is unfolded and provide improved surface quality.

For example, when the electronic device 500 is viewed from the outside, the folding area 403 may appear to be curved due to a component (e.g., a gear, a cam member, and/or a spring) of the hinge unit 530 provided in the open area 508, and thus, the surface quality of the display 400 may deteriorate.

The first member 553 and the second member 555 according to an embodiment cover the open area 508. The first member 553 and the second member 555 flatten the folding area 403, improve the visibility of the electronic device 500, and provide improved surface quality of the display 400.

In an embodiment, the first member 553 is disposed to so that it does not overlap with the center bar 506 based on the direction (e.g., -Z direction) in which the hinge plate 505 is viewed from the display 400 in a state in which the hinge unit 530 is flat (or unfolded). In addition, the second member 555 may be disposed to so that it does not overlap with the center bar 506 based on the direction (e.g., -Z direction) in which the hinge plate 505 is viewed from the display 400 in a state in which the hinge unit 530 is flat (or unfolded).

For example, as illustrated in FIG. 6B, the center bar 506 forms a width area D, which is a virtual space extending in a vertical direction (e.g., +Z direction) or a forward direction. The first member 553 and the second member 555 are disposed to so that they do not overlap with the width area D. Alternatively, the first member 553 and the second member 555 may extend to an area that does not exceed the width area D. However, the arrangement of the first member 553 and the second member 555 is not limited thereto. The first member 553 and the second member 555 according to an embodiment may be disposed to at least partially overlap with the width area D.

In an embodiment of the present disclosure, the first member 553 and the second member 555 are disposed to so that they do not overlap with the center bar 506 and may thus not collide or be in contact with other components when the hinge unit 530 is folded.

In an embodiment, the electronic device 500 may include the first adhesive layer 561 and the second adhesive layer 563. The first adhesive layer 561 and the second adhesive layer 563 may be formed of the same or similar material as the adhesives (e.g., P1, P2, P3, and P4) of the display 400. For example, the first adhesive layer 561 and the second adhesive layer 563 include at least one of an OCA, a PSA, a heat-reactive adhesive, a general purpose adhesive, or a double-sided tape.

In an embodiment, the first adhesive layer 561 connects the first member 553 and the second member 555 to the display 400. The first adhesive layer 561 is disposed adjacent to the connection member 551 in the side directions (e.g., +Y and -Y directions). For example, the first adhesive layer 561 is disposed to surround the connection member 551 in the side directions of the connection member 551 on the upper surfaces (e.g., the surfaces in the +Z direction) of the first member 553 and the second member 555.

In an embodiment, the second adhesive layer 563 connects the first member 553 and the second member 555 to the hinge plate 505. For example, the second adhesive layer 563 is adhered to the lower side surfaces (e.g., the surfaces in -Z direction) of the first member 553 and the second member 555.

In an embodiment, the first adhesive layer 561 and the second adhesive layer 563 have different thicknesses. For example, the second adhesive layer 563 may be relatively thicker than the first adhesive layer 561.

In an embodiment, the second adhesive layer 563 connects the first plate 505a to the first member 553 and connects the second plate 505b to the second member 555. The second adhesive layer 563 is required to transmit the force received from the first plate 505a and the second plate 505b to the first member 553 and the second member 555, respectively, so the second adhesive layer 563 needs to be structurally stable to prevent slip when the hinge unit 530 is driven. Accordingly, the second adhesive layer 563 is relatively thicker than the first adhesive layer 561. For example, the second adhesive layer 563 may have a thickness between 1.5 and 2.5 times the thickness of the first adhesive layer 561.

In an embodiment, when the thickness of the second adhesive layer 563 is less than 1.5 times the thickness of the first adhesive layer 561, slip occurs as the hinge unit 530 is driven. In addition, when the thickness of the second adhesive layer 563 is greater than 2.5 times the thickness of the first adhesive layer 561, the thickness of the electronic device 500 increases, thereby decreasing the space efficiency of the electronic device 500.

In an embodiment of the present disclosure, the second adhesive layer 563, with a thickness between 1.5 and 2.5 times, preferably twice, the thickness of the first adhesive layer 561, provides space efficiency of the electronic device 500 and prevents slippage in the operation of the hinge unit 530. For example, the first adhesive layer 561 may have a thickness of 50 micrometers (µm) and the second adhesive layer 563 may have a thickness of 100 µm.

In an embodiment, the first adhesive layer 561 and the second adhesive layer 563 have different storage moduli. For example, the first adhesive layer 561 may have a relatively larger storage modulus than the second adhesive layer 563.

In an embodiment, the first adhesive layer 561 connects the first member 553 and the second member 555 to the display 400, so the first adhesive layer 561 needs to provide a stable fixing force with less transformation. Since the larger the storage modulus, the less the deformation, the first adhesive layer 561 has a relatively larger storage modulus than the second adhesive layer 563. For example, the first adhesive layer 561 has a storage modulus between 7 and 12 times the storage modulus of the second adhesive layer 563.

In an embodiment, when the first adhesive layer 561 has a storage modulus less than 7 times the storage modulus of the second adhesive layer 563, the adhesion stability of the first adhesive layer 561 is reduced. In addition, when the first adhesive layer 561 exceeds 12 times the storage modulus of the second adhesive layer 563, the flexibility of the first adhesive layer 561 decreases, and the first adhesive layer 561 is separated or detached as the hinge operation is repeated.

In an embodiment of the present disclosure, the first adhesive layer 561, with a storage modulus between 7 and 12 times, preferably 10 times, the storage modulus of the second adhesive layer 563, provides adhesion stability of the first adhesive layer 561.

For example, the first adhesive layer 561 has a storage modulus of 700 to 1,560 kilopascals (kPa) and the second adhesive layer has a storage modulus of 100 to 130 kPa. Alternatively, for example, the first adhesive layer 561 has a storage modulus of 1,000 to 1,170 kPa and the second adhesive layer has a storage modulus of 100 to 130 kPa.

In an embodiment, the electronic device 500 further includes the first step member 571 and the second step member 572. The first step member 571 is provided in a partial area facing the first plate 505a from the first member 553. The second step member 572 is provided in a partial area facing the second plate 505b from the second member 555.

For example, the first step member 571 is adhered to a partial area facing the connection member 551 from the first member 553. Alternatively, the first step member 571 may be adhered to a partial area facing the first member 553 from the connection member 551.

For example, the second step member 572 is adhered to a partial area facing the connection member 551 from the second member 555. Alternatively, the second step member 572 may be adhered to a partial area facing the second member 555 from the connection member 551.

In an embodiment, the first step member 571 and the second step member 572 are formed of an adhesive material having adhesion. For example, the first step member 571 and the second step member 572 include at least one of an OCA, a PSA, a heat-reactive adhesive, a general adhesive, or a double-sided tape.

In an embodiment, the connection member 551 is connected to the first member 553 and the second member 555 through the first step member 571 and the second step member 572. For example, one surface (e.g., the surface in the +Z direction) of the first step member 571 is adhered to the connection member 551 and the other surface (e.g., the surface in -Z direction) of the first step member 571 is adhered to the first member 553. For example, one surface (e.g., the surface in the +Z direction) of the second step member 572 is adhered to the connection member 551 and the other surface (e.g., the surface in -Z direction) of the second step member 572 may be adhered to the second member 555.

In an embodiment, the sum of the thickness of one of the first step member 571 and the second step member 572 and the thickness of the connection member 551 is the same as the thickness of the first adhesive layer 561. For example, when the thickness of the first adhesive layer 561 is 50 µm, the thickness of each of the first step member 571 and the second step member 572 is 16 µm and the thickness of the connection member 551 is be 34 µm.

In an embodiment of the present disclosure, the first step member 571 and the second step member 572 prevent the first member 553 and the second member 555, which extend toward the connection member 551, from being in contact or colliding with the connection member 551 during hinge operation and may absorb an external impact.

In an embodiment, the first step member 571 fills the empty space between the first member 553 and the connection member 551 and the second step member 572 fills the empty space between the second member 555 and the connection member 551. In addition, the first step member 571 and the second step member 572 absorb an impact received through the connection member 551, the first member 553, or the second member 555 and reinforce the rigidity and durability of the electronic device 500.

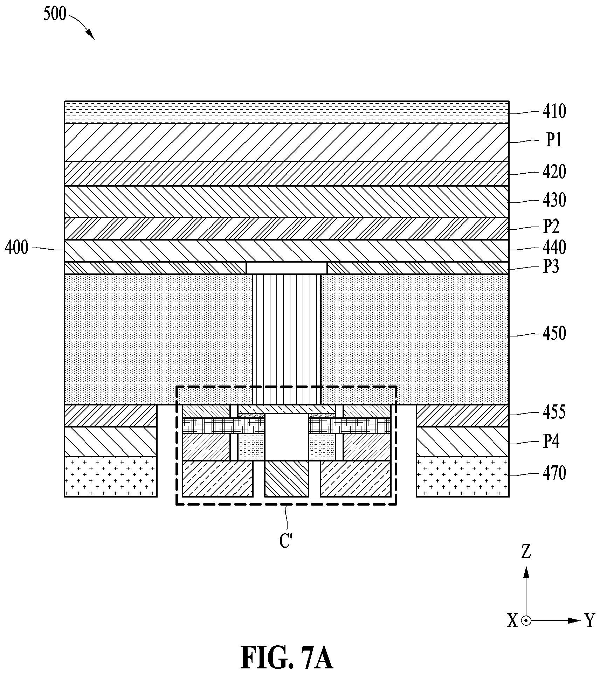

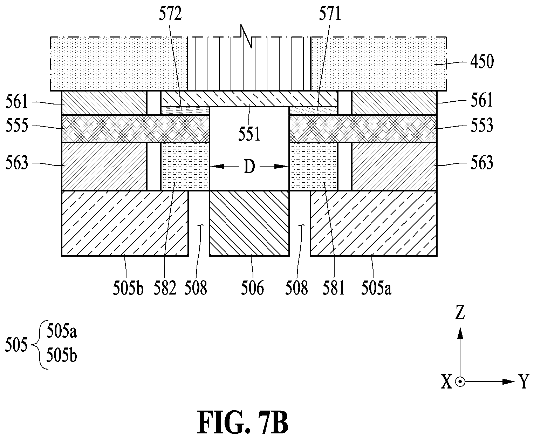

FIG. 7A is a schematic view illustrating a cross-section of the electronic device 500, according to an embodiment. FIG. 7B is a schematic view illustrating a cross-section of the electronic device 500, according to an embodiment. Particularly, FIG. 7A is the cross-sectional view of the inside of the electronic device 500 that is viewed based on the line B-B' of FIG. 5. FIG. 7B is an enlarged view of an area C' of FIG. 7A.

Hereinafter, the description provided above is not repeated, and it is obvious that a portion of the configuration and structure of the electronic device 500 may be replaced, added, or omitted within a scope easily understandable by one of ordinary skill in the art with reference to the following drawings and descriptions. In addition, at least one component or feature of the embodiments described above may be coupled to the electronic device 500 unless this is technically and clearly infeasible.

Referring to FIGS. 7A and 7B, the electronic device 500 according to an embodiment further includes a third step member 581 and a fourth step member 582.

In an embodiment, the third step member 581 is provided in a partial area facing the first plate 505a from the first member 553. The fourth step member 582 is provided in a partial area facing the second plate 505b from the second member 555.

For example, the third step member 581 is adhered to a surface facing the first plate 505a from the first member 553. Alternatively, the third step member 581 may be adhered to a surface facing the first member 553 from the first plate 505a.

For example, the fourth step member 582 is adhered to a surface facing the second plate 505b from the second member 555. Alternatively, the fourth step member 582 may be adhered to a surface facing the second member 555 from the second plate 505b.

In an embodiment, the thickness of one of the third step member 581 and the fourth step member 582 is the same as the thickness of the second adhesive layer 563. For example, when the thickness of the second adhesive layer 563 is 100 µm, the thickness of each the third step member 581 and the fourth step member 582 is 100 µm.

In an embodiment of the present disclosure, the third step member 581 and the fourth step member 582 prevent the first member 553 and the second member 555, which extend toward the connection member 551, from being in contact or colliding with the first plate 505a and the second plate 505b during hinge operation and may absorb an external impact.

In an embodiment of the present disclosure, the third step member 581 fills the empty space between the first member 553 and the first plate 505a and the fourth step member 582 fills the empty space between the second member 555 and the second plate 505b. In addition, the third step member 581 reinforces the rigidity and durability of the electronic device 500 by absorbing an impact received through the first plate 505a or the first member 553. The fourth step member 582 reinforces the rigidity and durability of the electronic device 500 by absorbing an impact received through the second plate 505b or the second member 555.

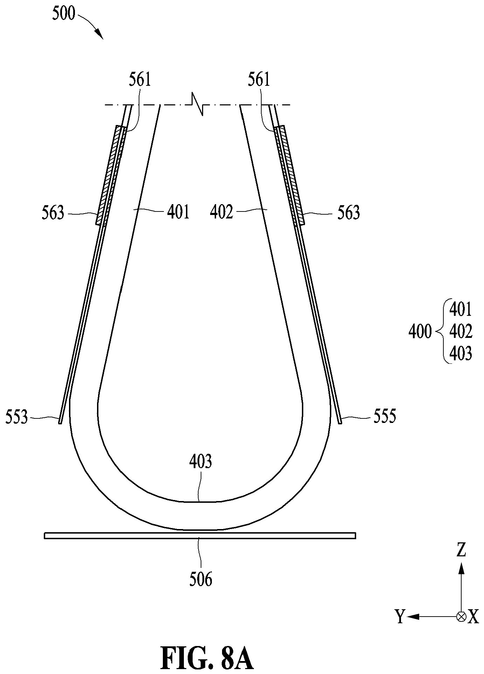

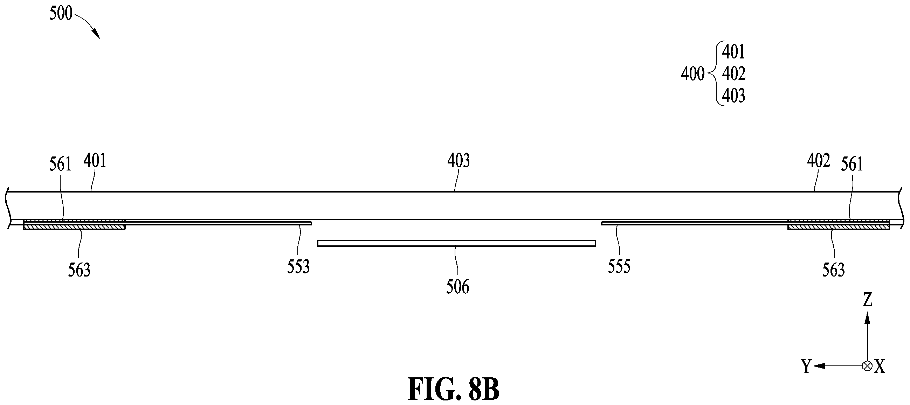

FIG. 8A is a schematic view illustrating the electronic device 500 in a folded state, according to an embodiment. FIG. 8B is a schematic view illustrating the electronic device 500 in an unfolded state, according to an embodiment.

Particularly, FIGS. 8A and 8B are schematic views illustrating a partial configuration of the electronic device 500 to describe the arrangement of the first member 553 and the second member 555 in unfolded and folded states.

FIGS. 8A and 8B illustrate the arrangement of the first member 553 and the second member 555 when the electronic device 500 is folded.

Hereinafter, the description provided above is not repeated, and it is obvious that a portion of the configuration and structure of the electronic device 500 may be replaced, added, or omitted within a scope easily understandable by one of ordinary skill in the art with reference to the following drawings and descriptions. In addition, at least one component or feature of the embodiments described above may be coupled to the electronic device 500 unless this is technically and clearly infeasible.

In an embodiment, when a hinge unit (e.g., the hinge unit 530 of FIG. 5), in which the first area 401 and the second area 402 of the display 400 do not face each other, is in an unfolded state (e.g., the state of the display 400 represented by the dashed line in FIG. 8), the first member 553 and the second member 555 are disposed so that they do not overlap with the center bar 506.

In an embodiment, when the hinge unit 530 is driven in a state in which the first area 401 and the second area 402 of the display 400 are folded and face each other (e.g., the state of the display 400 represented by the solid line in FIG. 8), the first member 553 and the second member 555 move without colliding with other components including the center bar 506.

In an embodiment, the first member 553 is operable to move by being connected to the first area 401 of the display 400 through the first adhesive layer 561. The second member 555 is operable to move by being connected to the second area 402 of the display 400 through the first adhesive layer 561.

In an embodiment, while moving by being connected respectively to the first area 401 and the second area 402, the first member 553 and the second member 555 encounter the risk of being in contact or colliding with the center bar 506 or other components.

The first member 553 and the second member 555, through the extension length and arrangement design as illustrated in FIG. 8, prevent collision of the first member 553 and the second member 555 and provide stability to the electronic device 500 during the operation of the hinge unit 530.

In an embodiment, by extending to the position that overlaps with a connection member (e.g., the connection member 551 of FIG. 6B) connected to the folding area 403 of the display 400, the first member 553 and the second member 555 reinforce and improve the rigidity and the durability of the folding area 403 of the display 400 and an area adjacent to the folding area 403, thereby providing improved surface quality.

In an embodiment, by being disposed to so that they do not overlap with the center bar 506, the first member 553 and the second member 555 are prevented from colliding with other components including the center bar 506 when the hinge unit 530 is folded and unfolded states.

According to an embodiment of the present disclosure, an electronic device 500 may include a display 400 including a first area 401, a second area 402, and a folding area 403 between the first area 401 and the second area 402, a hinge unit 530 configured to support the first area 401 and the second area 402 and driven based on a folding axis, a center bar 506 disposed between the hinge unit 530 and the folding area 403, a hinge plate 505 including a first plate 505a and a second plate 505b disposed on both sides of the center bar 506, respectively, a connection member 551 disposed between the center bar 506 and the folding area 403, a first member 553 disposed between the first plate 505a and the first area 401, and a second member 555 disposed between the second plate 505b and the second area 402. In an embodiment, the first member 553 and the second member 555 may be disposed to at least partially overlap with the connection member 551 based on the direction in which the hinge plate 505 is viewed from the display 400 in a state in which the hinge unit 530 is unfolded.

In an embodiment, the first member 553 may be disposed to non-overlap with the center bar 506 based on the direction in which the hinge plate 505 is viewed from the display 400 in a state in which the hinge unit 530 is unfolded.

In an embodiment, the second member 555 may be disposed to non-overlap with the center bar 506 based on the direction in which the hinge plate 505 is viewed from the display 400 in a state in which the hinge unit 530 is unfolded.

In an embodiment, the electronic device 500 may further include a first step member 571 provided in a partial area facing the connection member 551 from the first member 553 and a second step member 572 provided in a partial area facing the connection member 551 from the second member 555.

In an embodiment, the electronic device 500 may further include a first adhesive layer 561 disposed adjacent to the connection member 551 and configured to connect the first member 553 and the second member 555 to the display 400. In an embodiment, the first adhesive layer 561 may have the same thickness as the sum of the thickness of one of the first step member 571 and the second step member 572 and the thickness of the connection member 551.

In an embodiment, the electronic device 500 may further include a third step member 581 provided in a partial area facing the first plate 505a from the first member 553 and a fourth step member 582 provided in a partial area facing the second plate 505b from the second member 555.

In an embodiment, the electronic device 500 may further include a second adhesive layer 563 configured to connect the first member 553 and the second member 555 to the hinge plate 505. In an embodiment, the second adhesive layer 563 may have the same thickness as the thickness of one of the third step member 581 and the fourth step member 582.

In an embodiment, the electronic device 500 may further include the first adhesive layer 561 disposed adjacent to the connection member 551 and configured to connect the first member 553 and the second member 555 to the display 400 and the second adhesive layer 563 configured to connect the first member 553 and the second member 555 to the hinge plate 505.

In an embodiment, the first adhesive layer 561 and the second adhesive layer 563 may have different thicknesses.

In an embodiment, the second adhesive layer 563 may be relatively thicker than the first adhesive layer 561.

In an embodiment, the second adhesive layer 563 may have a thickness between 1.5 and 2.5 times the thickness of the first adhesive layer 561.

In an embodiment, the first adhesive layer 561 and the second adhesive layer 563 may have different storage moduli.

In an embodiment, the first adhesive layer 561 may have a relatively larger storage modulus than the second adhesive layer 563.

In an embodiment, the first adhesive layer 561 may have a storage modulus between 7 and 12 times the storage modulus of the second adhesive layer 563.

In an embodiment, each of the first member 553 and the second member 555 may include at least one of a metal material, a CFRP, a GFRP, and an AFRP.

In addition, according to an embodiment, an electronic device 500 may include a display 400 including a first area 401, a second area 402, and a folding area 403 between the first area 401 and the second area 402, a hinge unit 530 configured to support the first area 401 and the second area 402 and driven based on a folding axis, a center bar 506 disposed between the hinge unit 530 and the folding area 403, a hinge plate 505 including a first plate 505a and a second plate 505b disposed on both sides of the center bar 506, respectively, a connection member 551 disposed between the center bar 506 and the folding area 403, a first member 553 disposed between the first plate 505a and the first area 401, a second member 555 disposed between the second plate 505b and the second area 402, a first adhesive layer 561 disposed adjacent to the connection member 551 and configured to connect the first member 553 and the second member 555 to the display 400, and a second adhesive layer 563 configured to connect the first member 553 and the second member 555 to the hinge plate 505. In an embodiment, the first member 553 and the second member 555 may be disposed to at least partially overlap with the connection member 551 based on the direction in which the hinge plate 505 is viewed from the display 400 in a state in which the hinge unit 530 is unfolded.

In an embodiment, the first member 553 and the second member 555 may be disposed to non-overlap with the center bar 506 based on the direction in which the hinge plate 505 is viewed from the display 400 in a state in which the hinge unit 530 is unfolded.

In an embodiment, the electronic device 500 may further include a first step member 571 provided in a partial area facing the connection member 551 from the first member 553 and a second step member 572 provided in a partial area facing the connection member 551 from the second member 555. In an embodiment, the first adhesive layer 561 may have the same thickness as the sum of the thickness of one of the first step member 571 and the second step member 572 and the thickness of the connection member 551.

In an embodiment, the electronic device 500 may further include a third step member 581 provided in a partial area facing the first plate 505a from the first member 553 and a fourth step member 582 provided in a partial area facing the second plate 505b from the second member 555. In an embodiment, the second adhesive layer 563 may have the same thickness as the thickness of one of the third step member 581 and the fourth step member 582.

In an embodiment, the first adhesive layer 561 may have a storage modulus between 7 and 12 times the storage modulus of the second adhesive layer 563.

Although desirable embodiments are illustrated and described above, the present disclosure is not limited to said certain embodiments, various applications may surely be performed by those skilled in the art without deviating from what is claimed in the scope of claims, and such applications should not be understood separately from the technical idea or prospects herein.

## Claims

1. An electronic device (500) comprising:
a display (400) comprising a first area (401), a second area (402), and a folding area (403) between the first area (401) and the second area (402);
a hinge unit (530) configured to support the first area (401) and the second area (402) and driven based on a folding axis;
a center bar (506) disposed between the hinge unit (530) and the folding area (403);
a hinge plate (505) comprising a first plate (505a) and a second plate (505b) disposed on both sides of the center bar (506), respectively;
a connection member (551) disposed between the center bar (506) and the folding area (403);
a first member (553) disposed between the first plate (505a) and the first area (401); and
a second member (555) disposed between the second plate (505b) and the second area (402),
wherein the first member (553) and the second member (555) are disposed to at least partially overlap with the connection member (551) based on a direction in which the hinge plate (505 is viewed from the display (400) in a state in which the hinge unit (530) is unfolded.

2. The electronic device (500) of claim 1, wherein the first member (553) is disposed to non-overlap with the center bar (506) based on a direction in which the hinge plate (505) is viewed from the display (400) in a state in which the hinge unit (530) is unfolded.

3. The electronic device (500) of any preceding claim, wherein the second member (555) is disposed to non-overlap with the center bar (506) based on a direction in which the hinge plate (505) is viewed from the display (400) in a state in which the hinge unit (530) is unfolded.

4. The electronic device (500) of any preceding claim, further comprising:
a first step member (571) provided in a partial area facing the connection member (551) from the first member (553); and
a second step member (572) provided in a partial area facing the connection member (551) from the second member (555).

5. The electronic device (500) of any preceding claim, further comprising:
a first adhesive layer (561) disposed adjacent to the connection member (551) and configured to connect the first member (553) and the second member (555) to the display (400),
wherein the first adhesive layer (561) has a same thickness as a sum of a thickness of one of the first step member (571) and the second step member (572) and a thickness of the connection member (551).

6. The electronic device (500) of any preceding claim, further comprising:
a third step member (581) provided in a partial area facing the first plate (505a) from the first member (553); and
a fourth step member (582) provided in a partial area facing the second plate (505b) from the second member (555).

7. The electronic device (500) of any preceding claim, further comprising:
a second adhesive layer (563) configured to connect the first member (553) and the second member (555) to the hinge plate (505),
wherein the second adhesive layer (563) has a same thickness as a thickness of one of the third step member (581) and the fourth step member (582).

8. The electronic device (500) of any preceding claim, further comprising:
a first adhesive layer (561) disposed adjacent to the connection member (551) and configured to connect the first member (553) and the second member (555) to the display (400); and
a second adhesive layer (563) configured to connect the first member (553) and the second member (555) to the hinge plate (505).

9. The electronic device (500) of any preceding claim, wherein the first adhesive layer (561) and the second adhesive layer (563) have mutually different thicknesses.

10. The electronic device (500) of any preceding claim, wherein the second adhesive layer (563) is relatively thicker than the first adhesive layer (561).

11. The electronic device (500) of any preceding claim, wherein the second adhesive layer (563) has a thickness between 1.5 and 2.5 times a thickness of the first adhesive layer (561).

12. The electronic device (500) of any preceding claim, wherein the first adhesive layer (561) and the second adhesive layer (563) have different storage moduli.

13. The electronic device (500) of any preceding claim, wherein the first adhesive layer (561) has a relatively large storage modulus compared to the second adhesive layer (563).

14. The electronic device (500) of any preceding claim, wherein the first adhesive layer (561) has a storage modulus between 7 and 12 times a storage modulus of the second adhesive layer (563).

15. The electronic device (500) of any preceding claim, wherein each of the first member (553) and the second member (555) is formed of a material containing at least one of a metal material, a carbon fiber reinforced plastic, CFRP, a glass fiber reinforced plastic, GFRP, and an aramid fiber reinforced polymer, AFRP.
